# EUROPEAN PATENT APPLICATION

(11) **EP 4 592 377 A1**
(43) Date of publication of application: **30.07.2025**
(21) Application number: 24875679.3
(22) Date of filing: 05.09.2024
(51) Int. Cl.: C10G 1/00, C10G 1/10, C10G 31/06, C10G 31/09, C10G 29/06, C10G 29/16, C10G 7/00

(54) **METHOD FOR PRODUCING PYROLYSIS OIL FROM WASTE PLASTICS**

(30) Priority: 15.11.2023 KR 20230157804; 03.09.2024 KR 20240119622
(71) Applicant: LG Chem, Ltd., Yeoui-daero, Youngdungpo-gu Seoul 07336 (KR)
(72) Inventor: NA, Su Jin, Daejeon 34122 (KR); LEE, Sang Beom, Daejeon 34122 (KR); LEE, Sung Ho, Daejeon 34122 (KR)
(74) Representative: Goddar, Heinz J.
(86) International application number: PCT/KR2024/013388
(87) International publication number: WO 2025/105668

(57) **Abstract**

The present invention provides a method of preparing pyrolysis oil from waste plastics, the method including: (S1) feeding a waste plastic raw material and a process oil stream to a first melting tank and mixing the waste plastic raw material and the process oil stream to obtain a primary melt; (S2) passing the primary melt through a first filter to remove a non-melted solid material; (S3) feeding the primary melt from which the non-melted solid material is removed to a second melting tank and increasing a temperature of the primary melt to obtain a secondary melt; (S4) feeding the secondary melt to a pyrolysis reactor and after pyrolysis discharging a gaseous upper stream and a liquid lower stream; and (S5) condensing the gaseous upper stream discharged from the pyrolysis reactor and then feeding the gaseous upper stream condensed to a distillation column and refining the gaseous upper stream condensed.

## Description

### [Technical Field]

### CROSS-REFERENCE TO RELATED APPLICATION

The present application claims the benefit of priorities to Korean Patent Application No. 10-2023-0157804, filed on November 15, 2023, and Korean Patent Application No. 10-2024-0119622, filed on September 3, 2024, the entire contents of which are incorporated herein by reference.

### Technical Field

The present invention relates to a method of preparing pyrolysis oil from waste plastics, and more particularly, to a method of preparing pyrolysis oil with a high yield by removing foreign substances and impurities from a waste plastic raw material and ensuring process stability.

### [Background Art]

Recently, the development and use of plastics having physical properties required for various applications and purposes have increased. Plastics require a lot of energy from crude oil extraction to preparation, and a large amount of carbon is emitted in the process. Furthermore, even when plastics used in various products are discarded, environmental pollution and enormous disposal costs occur, and thus, recycling of waste plastics has become an important social issue.

In general, methods of recycling waste plastics (resins) include mechanical recycling and chemical recycling. Mechanical recycling is a method of crushing and sorting collected waste plastics, separating the waste plastics by type, melting the waste plastics, and mixing the waste plastics with a new material at a certain ratio or adding a functional additive when pelletizing the waste plastics to produce a resin product. Chemical recycling is a method of extracting only a specific polymer using various chemical means, or recovering and repolymerizing pure single molecules.

Chemical recycling may reduce greenhouse gases compared to incineration of waste plastics and has received attention in terms of alternative fuel development. For example, molten plastics obtained by collecting and sorting waste plastics such as polyethylene or polypropylene and then being subjected to a pretreatment process including crushing, washing, drying, and melting may be pyrolyzed to prepare liquid hydrocarbon oil, and the liquid hydrocarbon oil may be used as fuel oil for manufacturing petrochemical products.

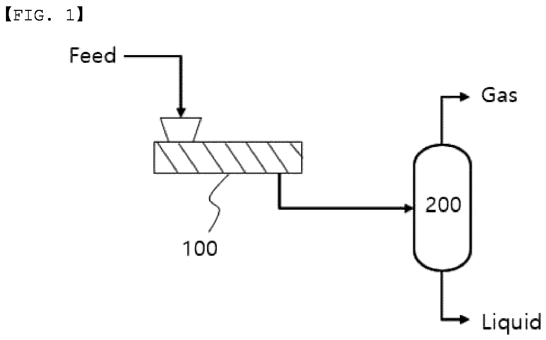

FIG. 1 illustrates a typical pyrolysis process of waste plastics, in which a waste plastic raw material is introduced into a screw-type extruder 100 equipped with a heating device to melt the waste plastic raw material, and the melt discharged from the extruder 100 is pyrolyzed in a reactor 200, a gaseous stream containing a light oil (LO) component is discharged from an upper portion of the reactor, and a liquid stream that is not vaporized is discharged from a lower portion of the reactor. In addition, highly viscous residual wax such as char remains at the bottom of the reactor.

The extruder used for melting the waste plastics has the function of melting and mixing by applying electric energy and shear to the washed and dried waste plastic crushed product, but the energy consumption is high due to the high electricity usage in the process, and there is a limit to the scale-up of the process.

The main component that may be converted into useful hydrocarbon oil from the waste plastic raw material is a polyolefin, and when foreign substances and impurities such as polyethylene terephthalate (PET)-derived substances and chlorine (Cl) components are contained, operational abnormalities such as plugging occur in a process equipment including a pyrolysis reactor, which may impair process stability and, ultimately, may reduce the yield and purity of pyrolysis oil. For example, when the waste plastic raw material contains polyethylene terephthalate (PET), sublimable substances such as terephthalic acid and benzoic acid are generated during the pyrolysis process, and these substances may accumulate in the reactor and a downstream process equipment, which may cause plugging. In addition, when combustible wastes such as polyvinyl chloride are contained, a chlorine (Cl) compound may be contained in liquid and gaseous pyrolysis products during the pyrolysis process, which may cause serious corrosion of the process equipment.

### [Disclosure]

### [Technical Problem]

In order to solve the problems mentioned in the background art, an object of the present invention is to provide a method of preparing pyrolysis oil with a high yield by removing foreign substances and impurities such as a chlorine compound from a waste plastic raw material and ensuring process stability.

### [Technical Solution]

In one general aspect, a method of preparing pyrolysis oil from waste plastics includes: (S1) feeding a waste plastic raw material and a process oil stream to a first melting tank and mixing the waste plastic raw material and the process oil stream to obtain a primary melt; (S2) passing the primary melt through a first filter to remove a non-melted solid material; (S3) feeding the primary melt from which the non-melted solid material is removed to a second melting tank and increasing a temperature of the primary melt to obtain a secondary melt; (S4) feeding the secondary melt to a pyrolysis reactor and after pyrolysis discharging a gaseous upper stream and a liquid lower stream; and (S5) condensing the gaseous upper stream discharged from the pyrolysis reactor and then feeding the gaseous upper stream condensed to a distillation column and refining the gaseous upper stream condensed.

In the present invention, the first melting tank may be maintained at a temperature of 150°C to 220°C, and the temperature increase of the primary melt in the second melting tank may be performed at 250°C to 400°C.

### [Advantageous Effects]

According to the present invention, a non-melted solid material is removed from a primary melt obtained by melting waste plastics with a process oil stream in a first dissolving tank capable of supplying heat by a heat transfer fluid other than electricity, and then the primary melt is fed to a second melting tank and increasing a temperature of the primary melt to decompose and remove a chlorine (Cl) compound contained in the waste plastics, such that the secondary melt whose temperature is increased to a temperature immediately before pyrolysis may be obtained.

As the secondary melt is introduced into a downstream pyrolysis reactor in a state in which solid foreign substances and impurities such as PET-derived substances and a chlorine compound are removed, process stability is secured to minimize operational abnormalities that may be caused by the impurities, such that pyrolysis oil converted from the waste plastics may be prepared with a high yield.

Furthermore, the use of the light hydrocarbon oil obtained from the pyrolysis of waste plastics may reduce greenhouse gas emissions caused when feeding a raw material in a petrochemical process, may improve process efficiency such as energy consumption saving, and may be environmentally advantageous as no harmful gases are produced when processing waste plastics.

### [Description of Drawings]

FIG. 1 illustrates a typical pyrolysis process of waste plastics.
FIG. 2 illustrates a process of preparing pyrolysis oil from waste plastics according to an embodiment of the present invention.
FIG. 3 illustrates a process of preparing pyrolysis oil from waste plastics according to a comparative example.
FIG. 4 illustrates a melt of Reference Example 1 (melting temperature 200°c).
FIG. 5 illustrates a melt of Reference Example 2 (melting temperature 220°c).
FIG. 6 illustrates a melt of Reference Example 3 (melting temperature 230°c).

### [Best Mode]

The terms and words used in the description and claims of the present invention are not to be construed limitedly as having general or dictionary meanings but are to be construed as having meanings and concepts meeting the technical idea of the present invention, based on a principle that the inventors are able to appropriately define the concepts of terms in order to describe their own inventions in the best mode.

The meaning of "including" or "containing" used in the present application concretely specifies a specific property, region, integer, step, operation, element, and/or component, and does not exclude the addition of another specific property, region, integer, step, operation, element, and/or component.

The term "stream" used in the present application may refer to a flow of a fluid in a process, and may also refer to a fluid flowing through a pipe itself. Specifically, the stream may refer to both a fluid flowing through a pipe connecting respective devices to each other itself and a flow of a fluid. In addition, the fluid may include any one or more components of gas, liquid, and solid.

The term "Cₙ" used in the present application refers to all hydrocarbons having n carbon atoms, and for example, "C₅₋₁₂" refers to all hydrocarbon molecules having 5 to 12 carbon atoms.

The term "liquid oil" used in the present application refers to a product obtained by converting a gaseous stream obtained in a pyrolysis step into a liquid phase by condensation, and may also be referred to as "liquid distilled oil".

In addition, the "pressure" referred to in the present application refers to an absolute pressure measured based on a complete vacuum.

Hereinafter, the present invention will be described in detail with reference to the accompanying drawings.

An embodiment of the present invention relates to a method of preparing pyrolysis oil with a high yield by removing foreign substances and impurities such as a chlorine compound from a waste plastic raw material and ensuring process stability.

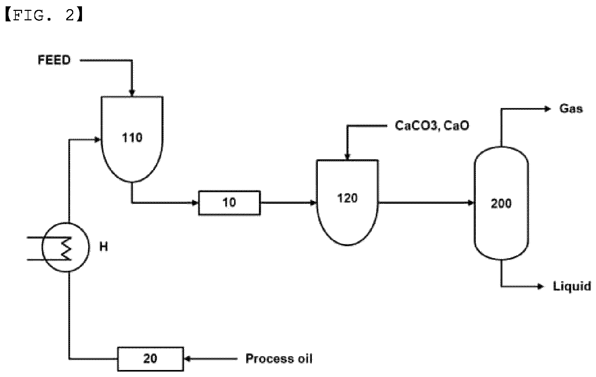

FIG. 2 illustrates a method of preparing pyrolysis oil from waste plastics according to an embodiment of the present invention, and the method may be performed by a process system including a first melting tank 110 and a second melting tank 120 into which a waste plastic raw material is introduced, a reactor 200 for performing pyrolysis of molten plastics, a first filter 10 and a second filter 20 for removing impurities, an optional heating means H, and a distillation column (not illustrated) for refining a pyrolysis product.

The waste plastics may be recovered from composite films, multilayer films, and other municipal wastes containing natural polymers, synthetic polymers, or a mixture thereof. The synthetic polymer may include thermoplastic resins such as polyethylene, polypropylene, and polystyrene. In addition, the thermoplastic resin may be a mixture of other types of resins such as polyvinyl chloride (PVC), polyethylene terephthalate (PET), and polyvinylidene fluoride (PVDF), a thermosetting resin, and the like. For example, the waste plastic raw material may be a thermoplastic resin containing less than 20 wt%, for example, 1 to 16 wt%, of PET or PVC based on the total weight thereof.

The waste plastics such as these materials may be subjected to, after collecting, a pretreatment process including sorting, crushing, washing, and drying. The pretreatment process may be performed by a general method in the art without any special limitations.

According to an embodiment of the present invention, a melting tank (dissolver) capable of supplying heat by a high-temperature heat transfer fluid is used to melt the waste plastics.

Specifically, the waste plastic raw material and the process oil stream are fed to the first melting tank 110 and mixed to obtain a primary melt (S1).

The first melting tank 110 supplies heat to the fed waste plastics to melt the waste plastics, and at this time, the process oil stream as a heat source may be fed through a feeding line different from a feeding line for the waste plastic raw material. An agitator may be installed in the first melting tank 110 to uniformly mix the waste plastic raw material and the process oil.

As the process oil stream, liquid oil obtained in the pyrolysis process of waste plastics may be used. For example, as the process oil stream, pyrolysis liquid oil generated in the process and oil discharged from a distillation column for refining the pyrolysis liquid oil may be used. In addition, fuel oil obtained in other refining processes or petrochemical processes may be used as the process oil stream.

If necessary, the process oil stream may be fed to the first melting tank after passing through the filter 20 to remove impurities. In addition, in order to supply additional heat depending on the temperature of the process oil stream, an auxiliary heating means H may be installed in the feeding line for the process oil stream.

The process oil stream is agitated and mixed with solid waste plastics in the first melting tank 110, and in this process, the process oil stream may act as a heat transfer fluid and may melt or dissolve the waste plastics depending on its temperature.

The process oil stream may be used in an amount of 5 to 40 times or 8 to 20 times the weight of the waste plastic raw material.

In an embodiment of the present invention, it is advantageous to maintain the first melting tank 110 at a temperature of 150°C to 220°C, and specifically, 170°C to 220°C. When the above temperature range is satisfied, it is possible to perform selective melting in which the effective components of the resins contained in the waste plastics that may be converted into hydrocarbon oil are melted into a liquid state, while solid foreign substances such as paper, dirt, and other components attached to the resins are left in a non-melted state. In addition, PET, which may reduce the yield of hydrocarbon oil during pyrolysis and may cause abnormalities in the process equipment, remains in a non-molten state at a temperature of 150°C to 220°C. More specifically, when the temperature of the first melting tank 110 is lower than 150°C, the resins contained in the waste plastics may not melt sufficiently. Meanwhile, when the temperature of the first melting tank 100 is higher than 220°C, PET may melt together with the resins convertible into pyrolysis oil, resulting in difficulty in effective selective melting, and additives contained in the resins may melt, resulting in the inclusion of foreign substances such as heteroatoms and metal impurities in the melt.

In addition, the selective melting of the waste plastic raw material in the first melting tank 110 may be performed for 0.1 to 2 hours, and specifically, 0.15 to 1 hour.

After the selective melting, the primary melt obtained in the first melting tank 110 is passed through the first filter 10 to remove a non-melted solid material (S2).

The first filter is a means for separating solid foreign substances other than liquid resins contained in the primary melt, and may be used without special limitations as long as it has a form capable of separating solids and liquids.

In addition, filtration in the first filter may be performed without heating to effectively separate non-melted solid foreign substances contained in the primary melt. That is, the filtration may be performed at a temperature lower than or equal to the primary melting temperature.

The primary melt from which the non-melted solid material is removed through the first filter 10 is fed to the second melting tank 120 and the temperature of the primary melt is increased to obtain a secondary melt (S3).

In the second melting tank 120, additional melting is performed by supplying a higher temperature of heat to the primary melt, and the temperature may be increased to a temperature immediately before pyrolysis while further reducing a viscosity of the liquid component. In addition, during the additional melting process, a dechlorination process may be performed to decompose and remove chlorine (Cl) components of combustible materials such as polyvinyl chloride (PVC) in waste plastics.

The temperature increase of the primary melt may be performed using a means capable of transferring high-temperature heat without any special limitations. For example, the temperature increase of the primary melt may be performed by passing a heat transfer fluid such as high-temperature/high-pressure steam, hot water, or a process oil stream through a jacket provided on the outside of the second melting tank 120 to transfer heat, or high-temperature heat may be transferred by dividing the melt in the second melting tank 120 into a certain amount, heating the melt using an electric heater or a heating furnace, and then introducing the melt into the second melting tank 120 again.

Specifically, the temperature of the primary melt fed from the second melting tank 120 may be increased to 250°C to 400°C, and specifically, 270°C to 400°C. When the increased temperature is lower than 250°C, the dechlorination efficiency may not be sufficient, and when the increased temperature is higher than 400°C, a pyrolysis reaction may occur in the second melting tank, resulting in a reduction in oil yield.

In addition, a residence time for increasing the temperature of the primary melt in the second melting tank 120 may be in a range of 0.1 to 3 hours, and specifically, 0.5 to 1 hour.

In addition, a dechlorinating agent capable of absorbing chlorine may be added to the second melting tank 120 to perform a more effective dechlorination process.

The dechlorinating agent may be used without limitations as long as it is a material capable of absorbing chlorine, and for example, CaO, CaCO₃, Ca(OH)₂, NaOH, Na₂CO₃, NaHCO₃, Fe₂O₃, Fe₃O₄, or a mixture thereof may be used.

Through the additional melting as described above, the secondary melt whose temperature is increased to a temperature immediately before pyrolysis may be obtained while removing chlorine (Cl) contained in waste plastics, and as the secondary melt is introduced into a downstream pyrolysis reactor, operational abnormalities that may be caused by impurities may be minimized and decomposition efficiency is improved, such that pyrolysis oil may be stably prepared with a high yield.

When the additional melting is not performed in the second melting tank 120, dechlorination is not sufficiently performed, which may cause corrosion of the process equipment including the pyrolysis reactor or cause process instability.

Meanwhile, gas containing chlorine (Cl) may be discharged from upper portions of the first melting tank and the second melting tank, and the discharged gas may be removed through a neutralization process. The neutralization process may be performed by a general method in the art, and for example, a washing column, an absorption column, and the like may be used, but are not limited thereto.

The secondary melt obtained in the second melting tank 120 is fed to the reactor 200 and the secondary melt is pyrolyzed to obtain a pyrolysis product containing a gaseous fraction and a liquid fraction (S4).

The pyrolysis reactor that may be used in the present invention may be a stirred tank reactor equipped with an agitator, the agitator is not particularly limited as long as it may sufficiently agitate the waste plastic melt fed as a raw material, and may be, for example, a helical ribbon type or an anchor type, and it is advantageous to maintain a gap of about 5 mm to 1 cm from an inner wall of the reactor to maximize agitation of the waste plastics and heat transfer through the wall of the reactor. In addition, the reactor may be operated in either a batch type or continuous type. In addition, the reactor may be purged with nitrogen to maintain an oxygen-free or low-oxygen atmosphere while performing a pyrolysis reaction of the waste plastic melt.

The waste plastic melt is fed to the reactor equipped with the agitator and heated while operating the agitator to perform pyrolysis of the waste plastic melt.

The secondary melt fed to the reactor 200 may be heated through a heating means provided outside the reactor. For example, the heating means may perform heating by passing a heat transfer fluid such as high-temperature/high-pressure steam, hot water, or a process oil stream through a jacket and transferring heat, or high-temperature heat may be transferred by dividing the melt into a certain amount, heating the melt using an electric heater or a heating furnace, and then introducing the melt into the reactor 200 again. In addition, another heating means may be used without special limitations.

In an embodiment of the present invention, the pyrolysis of the secondary melt may be performed at a temperature of higher than 400°C to 500°C. The main component of the waste plastic raw material is a thermoplastic resin, and for example, considering that the waste plastic raw material may be a mixture containing polyethylene having a number average molecular weight of 10,000 to 500,000, and specifically, 100,000 to 300,000, or polypropylene having a number average molecular weight of 5,000 to 300,000, and specifically, 10,000 to 200,000, it is advantageous to perform the pyrolysis reaction at higher than 400°C to 500°C, and specifically, 410°C to 450°C. When the pyrolysis temperature is 400°C or lower, a pyrolysis rate may be slow, and when the pyrolysis temperature is higher than 500°C, the pyrolysis rate may be fast, but an excessive amount of solid carbides such as char may be produced due to a high temperature.

In the pyrolysis step of the waste plastic melt, a non-condensable C₁₋₄ component, and vaporized low molecular weight hydrocarbons obtained by decomposition of a C₅₋₁₂ light component such as naphtha that may be converted into liquid oil by condensation, a C₁₃₋₂₂ middle component, and a C₂₃₋₄₀ heavy component may be discharged as an upper stream of the reactor, and a liquid stream that is not vaporized may be discharged as a lower stream of the reactor. In addition, highly viscous residual wax such as char remains at the bottom of the reactor.

A portion of the liquid oil obtained in the pyrolysis step may be used as the process oil stream as described above. If necessary, the process oil stream may be passed through the second filter 20 before being fed to the first melting tank to remove impurities, such as a highly viscous residue such as char remaining during pyrolysis. In addition, in order to supply additional heat depending on the temperature of the process oil stream, an auxiliary heating means H may be installed in the feeding line for the process oil stream. The second filter may be used without any special limitations as long as it has a form capable of separating highly viscous components and liquids.

The upper discharge stream of the reactor 200 may be converted into liquid gas oil through a condensation process, and then fed to a distillation column for refining, thereby obtaining pyrolysis oil (S5).

The condensation is a process of cooling the pyrolysis gas, and through this, a polymerization reaction of hydrocarbons in the high-temperature pyrolysis gas discharged from the pyrolysis reactor may be suppressed and a heat load of a subsequent process (refining process) may be reduced. For example, when the gaseous stream discharged from the upper portion of the pyrolysis reactor is fed to a condenser, and heat exchange with quench oil or quench water is performed, the gaseous stream may be cooled and condensed to obtain liquid gas oil. Meanwhile, the gas components (for example, C₁₋₄ hydrocarbons) that are not condensed in the heat exchange may be discharged from an upper portion of the condenser, and may be used as a heat source for the petrochemical process or a heat source for the pyrolysis process through a subsequent process such as compression.

The refining process may be performed in a general manner in the art, and is not particularly limited. For example, a feed stream fed to the distillation column may contain all oil components obtained from the pyrolysis gas of waste plastics, light oil (LO) having a low boiling point may be discharged from an upper portion of the distillation column, and heavy oil (HO) having a high boiling point may be discharged from a lower portion of the distillation column.

The heavy oil discharged from the distillation column may have a boiling point of 200 to 550°C at atmospheric pressure and may be recovered and used as a process oil stream.

According to the present invention as described above, a non-melted solid material containing PET is removed from the primary melt obtained by melting waste plastics with the process oil stream in the first melting tank capable of supplying heat by a heat transfer fluid other than electricity, and then the primary melt is fed to the second melting tank and increasing the temperature of the primary melt to decompose and remove a chlorine (Cl) compound contained in the waste plastics, such that a secondary melt whose temperature is increased to a temperature immediately before pyrolysis may be obtained.

As the secondary melt is introduced into a downstream pyrolysis reactor in a state in which solid foreign substances and impurities such as PET-derived substances and a chlorine compound are removed, process stability is secured to minimize operational abnormalities that may be caused by the impurities, such that pyrolysis oil converted from the waste plastics may be prepared with a high yield.

Furthermore, the use of the light hydrocarbon oil obtained from the pyrolysis of waste plastics may reduce greenhouse gas emissions caused when feeding a raw material in a petrochemical process, may improve process efficiency such as energy consumption saving, and may be environmentally advantageous as no harmful gases are produced when processing waste plastics.

### [Mode for Invention]

Hereinafter, the present invention will be described in more detail with reference to examples. However, the following examples are provided for illustrating the present invention. It is apparent to those skilled in the art that various modifications and alterations may be made without departing from the scope and spirit of the present invention, and the scope of the present invention is not limited thereto.

### Example 1:

Pyrolysis of waste plastics was performed according to a process sequence as illustrated in FIG. 2.

First, a waste plastic crushed product containing polyethylene (PE), polypropylene (PP), polyethylene terephthalate (PET), and polyvinyl chloride (PVC) in a weight ratio of 56:33:9:2 and a portion of a liquid stream discharged from a lower portion of a downstream pyrolysis reactor 200 as a process oil stream were fed to a first melting tank 110 and mixed, thereby obtaining a primary melt. At this time, the waste plastic crushed product and the process oil were used in a weight ratio of 1:5, and melting was performed while maintaining a temperature of the first melting tank 110 at 200°C.

The primary melt was passed through a first filter 10 at a temperature lower than the melting temperature to remove a non-melted solid material including PET, the liquid melt was fed to a second melting tank 120, and a mixture of CaO and CaCO₃ was added to the second melting tank 120 as a dechlorinating agent. A temperature of the liquid melt fed to the second melting tank 120 was increased to 250°C to obtain a secondary melt.

The secondary melt was fed to the reactor 200 and pyrolysis was performed at 430°C for 1 hour. An upper gaseous stream produced by the pyrolysis was condensed and then fed to a distillation column, distillation was performed up to 350°C to obtain light/middle pyrolysis oil, and the remaining liquid heavy oil and solid char were separated.

### Example 2:

Pyrolysis oil was obtained by performing the same process as that of Example 1, except that the temperature of the melt fed to the second melting tank 120 was increased to 400°C.

### Comparative Example 1:

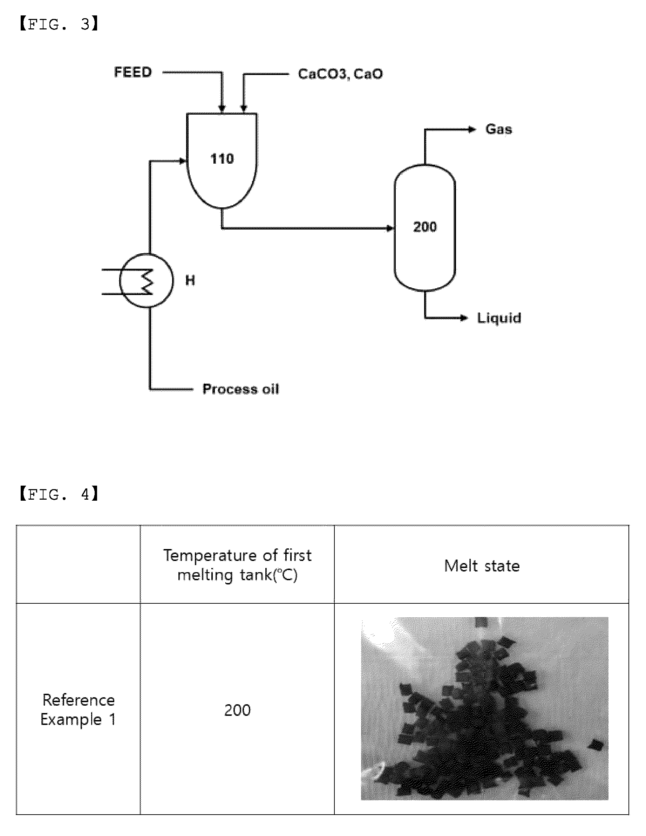

Pyrolysis of waste plastics was performed according to a process sequence as illustrated in FIG. 3.

First, a waste plastic crushed product containing polyethylene (PE), polypropylene (PP), polyethylene terephthalate (PET), and polyvinyl chloride (PVC) in a weight ratio of 56:33:9:2, a mixture of CaO and CaCO₃ as a dechlorinating agent, and a portion of a liquid stream discharged from a lower portion of a downstream pyrolysis reactor 200 as a process oil stream were fed to a first melting tank 110 and mixed, thereby obtaining a melt. At this time, a temperature of the first melting tank 110 was maintained at 350°C.

The melt was fed to the reactor 200 and pyrolysis was performed at 430°C for 1 hour. An upper gaseous stream produced by the pyrolysis was condensed and then fed to a distillation column, distillation was performed up to 350°C to obtain light/middle pyrolysis oil, and the remaining liquid heavy oil and solid char were separated.

### Comparative Example 2:

Pyrolysis oil was obtained by performing the same process as that of Example 1, except that melting was performed by maintaining the temperature of the first melting tank 110 at 400°C.

Table 1 shows the process conditions applied in the above examples and comparative examples, the composition of pyrolysis oil confirmed through single distillation, and the presence or absence of operational abnormalities in the equipment (pyrolysis reactor, distillation column, or the like) .

**[Table 1]**

| | Process condition | | | Pyrolysis oil composition | | | | Operational abnormalities in equipment |
|---|---|---|---|---|---|---|---|---|
| | Melting tank | | Pyrolysis reactor | Liquid oil (%) | | Solid (%) | Gas (%) | |
| | First | Second | | | | | | |
| | | | | Light/Middle | Heavy | Char | | |
| Example 1 | 200°C | 250°C | 430°C | 81.0 | 15.1 | - | 3.9 | - |
| Example 2 | 200°C | 400°C | 430°C | 79.7 | 15.6 | - | 4.7 | - |
| Comparative Example 1 | 350°C | - | 430°C | 74.9 | 18.1 | 1.0 | 6.0 | White solid observed at upper portion of reactor |
| | | | | | | | | White precipitate formation in oil |
| Comparative Example 2 | 400°C | - | 430°C | 75.5 | 17.2 | 0.9 | 6.4 | Pipe plugging |
| | | | | | | | | White precipitate formation in oil |

As can be seen in Table 1, in Examples 1 and 2, the primary melting was performed at a low temperature of 200°C in the first melting tank to remove non-melted foreign substances including PET, and then, the secondary melting was performed at a higher temperature in the second melting tank and then fed into the pyrolysis reactor, such that no operational abnormalities that could be caused by the foreign substances occurred.

On the other hand, in Comparative Examples 1 and 2, as a result of performing a single melting at a high temperature of 350°C to 400°C, the PET component present in the waste plastic raw material was contained in the melt and introduced into the pyrolysis reactor, and thus, during the pyrolysis process, terephthalic acid or benzoic acid, which is a sublimable substance, was generated from PET, resulting in the observation of a white solid at the upper portion of the reactor or the occurrence of pipe plugging. In addition, char was formed during the pyrolysis process, and thus, the yield of liquid oil was lower than in the examples, and since a PET decomposition product was contained in the oil, the quality of the pyrolysis oil was deteriorated.

### Example 3:

Pyrolysis oil was obtained by performing the same process as that of Example 1, except that melting was performed by maintaining the temperature of the first melting tank 120 at 220°C, and the temperature of the melt fed to the second melting tank 120 was increased to 350°C.

### Example 4:

The same process as that of Example 1 was performed, except that melting was performed by maintaining the temperature of the first melting tank 120 at 230°C, and the temperature of the melt fed to the second melting tank 120 was increased to 350°C.

The obtained pyrolysis oil was analyzed for components to measure the contents of heteroatoms and metal impurities, and the results are shown in Table 2.

**[Table 2]**

| | Process condition | | | Pyrolysis oil composition | | | Foreign substances | |
|---|---|---|---|---|---|---|---|---|
| | Melting tank | | Pyrolysis reactor | Liquid oil (%) | Solid (%) | Gas (%) | Heteroatoms (N) | Metal impurities (Ca) |
| | First | Second | | | | | | |
| Example 3 | 220°C | 350°C | 430°C | 94.5 | - | 5.5 | 25 ppm | - |
| Example 4 | 230°C | 350°C | 430°C | 93.9 | - | 6.1 | 88 ppm | 17 ppm |

As can be seen in Table 2, in Example 3, as the melting temperature of the first melting tank was maintained at 220°C, no metal impurities were detected in the finally obtained pyrolysis oil, and heteroatoms were detected in trace amounts at an acceptable level. Meanwhile, in Example 4, as the melting temperature of the first melting tank was increased to 230°C, metal impurities were detected in the final pyrolysis oil, and the content of heteroatoms was also increased. Therefore, it can be confirmed that it is desirable to maintain the melting temperature of the first melting tank at 220°C or lower.

### Reference Examples 1 to 3:

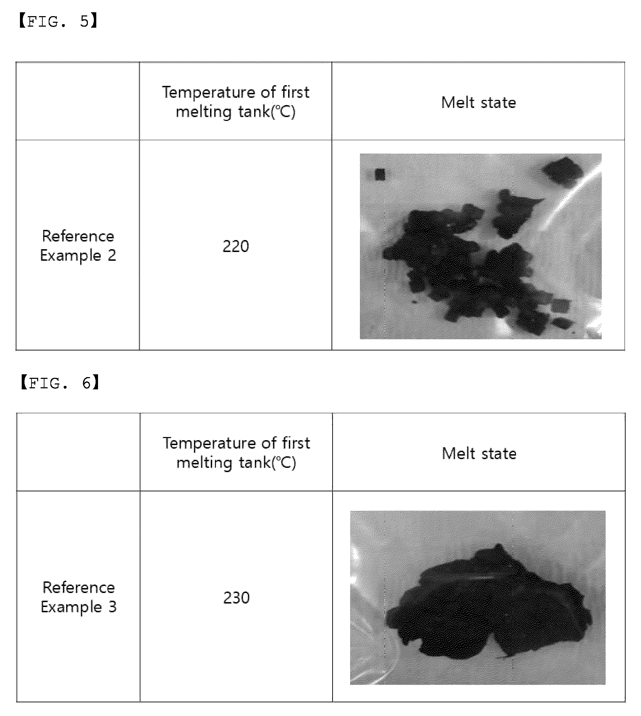

In order to confirm selective melting of a polyolefin resin according to the melting temperature, 4 g of each of PE pellets, PP pellets, and PET pellets were introduced into the first melting tank 110, 200 g of process oil was fed to the first melting tank 110, and then melting was performed for 1 hour at the melting temperature shown in FIG. 4 to FIG. 6.

The states of the melts obtained in the above reference examples are shown in FIG. 4 to FIG. 6.

In FIG. 4 to FIG. 6, it can be confirmed that the melts of Reference Example 1 (melting temperature of 200°C) and Reference Example 2 (melting temperature of 220°C) maintain the pellet form in which the PE and PE pellets are melted but the PET pellets are not melted, whereas in Reference Example 3 (melting temperature of 230°C), the PET pellets are melted together with PE/PP.

Therefore, in order to perform selective melting in which the effective components in the resins contained in the waste plastics that may be converted into hydrocarbon oil are melted, while leaving PET, which may cause abnormalities in the process equipment, in a non-melted state, it is preferable to maintain the temperature of the first melting tank at a temperature of 150°C to 220°C.

## Claims

1. A method of preparing pyrolysis oil from waste plastics, the method comprising:
(S1) feeding a waste plastic raw material and a process oil stream to a first melting tank and mixing the waste plastic raw material and the process oil stream to obtain a primary melt;
(S2) passing the primary melt through a first filter to remove a non-melted solid material;
(S3) feeding the primary melt from which the non-melted solid material is removed to a second melting tank and increasing a temperature of the primary melt to obtain a secondary melt;
(S4) feeding the secondary melt to a pyrolysis reactor and after pyrolysis discharging a gaseous upper stream and a liquid lower stream; and
(S5) condensing the gaseous upper stream discharged from the pyrolysis reactor and then feeding the gaseous upper stream condensed to a distillation column and refining the gaseous upper stream condensed.

2. The method of claim 1, wherein a temperature of the first melting tank is maintained at a temperature of 150°C to 220°C.

3. The method of claim 1, wherein the process oil stream includes one or more selected from pyrolysis liquid oil generated in a process, oil discharged from a distillation column for refining the pyrolysis liquid oil, and fuel oil obtained in other refining processes or petrochemical processes.

4. The method of claim 1, wherein the process oil stream is passed through a second filter before being fed to the first melting tank to remove impurities.

5. The method of claim 1, wherein the waste plastic raw material and the processed oil stream are fed to the first melting tank through different feeding lines respectively.

6. The method of claim 1, wherein a heating means for supplying additional heat is included in a feeding line for the process oil stream.

7. The method of claim 1, wherein the temperature increase of the primary melt in the second melting tank is performed at 250°C to 400°C.

8. The method of claim 1, wherein a dechlorinating agent is additionally fed to the second melting tank.

9. The method of claim 8, wherein the dechlorinating agent includes CaO, CaCO₃, Ca(OH)₂, NaOH, Na₂CO₃, NaHCO₃, Fe₂O₃, Fe₃O₄, or a mixture thereof.

10. The method of claim 1, wherein the pyrolysis of the secondary melt is performed at a temperature of higher than 400°C to 500°C.
